(19) Europäisches Patentamt
European Patent Office
Office européen des brevets

(11) EP 4 574 453 A1

(12) EUROPEAN PATENT APPLICATION

(43) Date of publication:
**25.06.2025 Bulletin 2025/26**

(21) Application number: **24214445.9**

(22) Date of filing: **21.11.2024**

(51) International Patent Classification (IPC):
***B60C 1/00*** *(2006.01)* ***C08K 5/092*** *(2006.01)*
***C08K 5/3445*** *(2006.01)*

(52) Cooperative Patent Classification (CPC):
(C-Sets available)
**B60C 1/0016; C08K 5/092; C08K 5/3445** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.12.2023 JP 2023216162**

(71) Applicant: **SUMITOMO RUBBER INDUSTRIES, LTD.**
**Kobe-shi, Hyogo 651-0072 (JP)**

(72) Inventor: **SAWADA, Jun**
**Chuo-ku, Kobe-shi, 651-0072 (JP)**

(74) Representative: **TBK**
**Bavariaring 4-6**
**80336 München (DE)**

# (54) RUBBER COMPOSITION AND TIRE

(57) It is an object of the present invention to provide a novel rubber composition showing excellent grip performance and a tire comprising a tire member composed of the rubber composition. Provided is a rubber composition comprising a rubber component comprising an epoxidized diene-based rubber, at least one selected from the group consisting of an imidazole compound and a bivalent or higher-valent carboxylic acid compound, and oil, wherein a value ($A_0/T_1$) obtained by dividing a content $A_0$, in parts by mass, of the oil based on 100 parts by mass of the rubber component by a longest relaxation time $T_1$, in hours, of the rubber composition calculated from Procedure X is 0.045 or more.

FIG. 1

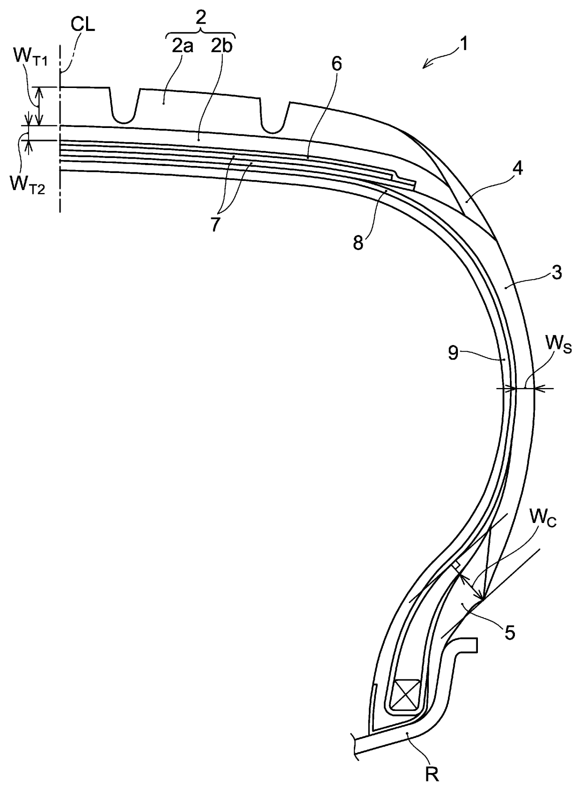


EP 4 574 453 A1

(52) Cooperative Patent Classification (CPC): (Cont.)

C-Sets
**C08L 15/00, C08L 7/00, C08L 91/00, C08K 5/092;**
**C08L 15/00, C08L 7/00, C08L 91/00, C08K 5/092, C08K 5/3445;**
**C08L 15/00, C08L 7/00, C08L 91/00, C08K 5/3445;**
**C08L 15/00, C08L 91/00, C08K 5/092;**
**C08L 15/00, C08L 91/00, C08K 5/3445**

## Description

TECHNICAL FIELD

The present invention relates to a rubber composition and a tire.

BACKGROUND OF THE INVENTION

For tires mounted to automobiles, it is important to maintain a gripping force between a tread and a road surface during all of driving, braking, and turning of an automobile. Conventionally, various methods for improving grip performance have been studied. For example, JP 2008-285524 A describes a pneumatic tire comprising a tread rubber whose grip performance is improved by using a fine particle zinc oxide.

SUMMARY OF THE INVENTION

It is an object of the present invention to provide a novel rubber composition showing an excellent grip performance and a tire comprising a tire member composed of the rubber composition.
The present invention relates to the following rubber composition:

> A rubber composition comprising a rubber component comprising an epoxidized diene-based rubber, at least one selected from the group consisting of an imidazole compound and a bivalent or higher-valent carboxylic acid compound, and oil,
> wherein a value ($A_0/T_1$) obtained by dividing a content $A_0$, in parts by mass, of the oil based on 100 parts by mass of the rubber component by a longest relaxation time $T_1$, in hours, of the rubber composition calculated from Procedure X is 0.045 or more.

According to the present invention, a novel rubber composition showing an excellent grip performance and a tire comprising a tire member composed of the rubber composition can be provided.

BRIEF DESCRIPTION OF THE DRAWINGS

FIG. 1 is a cross-sectional view of a tire relating to one embodiment of the present invention taken along a plane passing through a tire rotation axis.

DETAILED DESCRIPTION

The rubber composition relating to one embodiment of the present invention is:

> A rubber composition comprising a rubber component comprising an epoxidized diene-based rubber, at least one selected from the group consisting of an imidazole compound and a bivalent or higher-valent carboxylic acid compound, and oil,
> wherein a value ($A_0/T_1$) obtained by dividing a content $A_0$, in parts by mass, of the oil based on 100 parts by mass of the rubber component by a longest relaxation time $T_1$, in hours, of the rubber composition calculated from Procedure X is 0.045 or more.

Although it is not intended to be bound by theory, the reason why the above-described rubber composition shows an excellent grip performance is considered as follows. That is, the rubber composition comprises an epoxidized diene-based rubber, at least one selected from the group consisting of an imidazole compound and a bivalent or higher-valent carboxylic acid compound, and oil, and a value ($A_0/T_1$) obtained by dividing an amount of the oil by a longest relaxation time is equal to or greater than a certain value, whereby all of flexibility, a scale of hysteresis loss, and a response speed to hysteresis loss are improved, which are considered to contribute to an improvement in grip performance.
$A_0/T_1$ is preferably 0.100 or more.
When a value of $A_0/T_1$ is satisfied under a stricter condition, it is considered that grip performance is improved.
The rubber component preferably comprises greater than 0% by mass and less than 50% by mass of an isoprene-based rubber.
This is because the effects of the present invention can be further enhanced.
An epoxidation rate in the epoxidized diene-based rubber is preferably 50 mol% or less.
This is because the effects of the present invention can be further enhanced.

A content of a filler based on 100 parts by mass of the rubber component is preferably less than 45 parts by mass.

This is because the effects of the present invention can be further enhanced.

Another embodiment of the present invention is a tire comprising a tire member composed of any of the above-described rubber compositions.

This is because such a tire is one of preferred embodiments capable of exerting properties of the above-described rubber compositions.

When a thickness, in mm, of the tire member is referred to as W, a product ($A_0 \times W/T_1$) of $A_0/T_1$ and W is preferably 0.180 or more.

This is because the effects of the present invention can be further enhanced.

The tire member is preferably a cap tread.

This is because such a tire is one of preferred embodiments capable of exerting properties of the above-described rubber compositions.

<Definition>

A "standardized state" is a state in which the tire is rim-assembled to a standardized rim, filled with air at a standardized internal pressure, and applied with no load.

A "dimension of each part of a tire" is a value specified in a standardized state for one appearing on the outer surface of the tire unless otherwise specified, while it is a value specified, for example, in a condition where the tire is cut on a plane including a tire rotation axis and the cut tire piece is held to a rim width of a standardized rim, for one present inside the tire or on a tire cutting surface.

A "standardized rim" is a rim, in a standard system including a standard on which the tire is based, defined by the standard for each tire. For example, the "standardized rim" refers to a standard rim of an applicable size described in "Jatma Year Book" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Additionally, in a case of tires that are not defined by the standard, the "standardized rim" shall refer to a rim that can be rim-assembled and maintain an internal pressure, that is, one that has the smallest rim diameter and secondly has the narrowest rim width, among rims that do not cause air leakage between the rim and the tire.

A "standardized internal pressure" is an air pressure, in a standard system including a standard on which the tire is based, defined for each tire by the standard, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in the case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load" is a load, in a standard system including a standard on which the tire is based, defined for each tire by the standard, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in the case of tires that are not defined by the standard, a maximum load capacity $W_L$ obtained by another calculation is defined as a standardized load.

A "maximum load capacity ($W_L$)" is calculated by the following equation. "V" represents a virtual volume, in $mm^3$, of a tire, "Dt" represents a tire outer diameter, in mm, in a standardized state, "Ht" represents a cross-sectional height, in mm, of the tire in a tire radial direction on a cross section of the tire taken along a plane including a tire rotation axis, and "Wt" represents a cross-sectional width, in mm, of the tire in the standardized state. When R represents a rim diameter of the tire, Ht can be calculated by the following equation: (Dt-R)/2. Wt is a value obtained by excluding, if any, patterns, letters, or the like on the side surface of the tire. Besides, the maximum load capacity has the same meaning as the above-described standardized load.

$$W_L = 0.000011 \times V + 175$$

$$V = \{(Dt/2)^2 - (Dt/2 - Ht)^2\} \times \pi \times Wt$$

A "tire member" refers to, for example, a cap tread, a base tread, a sidewall, a clinch, and the like, but is not limited to these members.

A "thickness (W) of a tire member" is a thickness, in mm, that is measured in a state where a tire is held to a standardized rim width after cutting the tire taken along a plane passing through a tire rotation axis. More specifically, thicknesses of a cap tread and a base tread are thicknesses on a tire center line in a tire radial direction. In a case where the tire has a groove on the tire center line, each of these thicknesses is a thickness of a rubber layer in a central part, in a tire width direction, of a land part nearest to the tire center line. A thickness of a sidewall is a thickness of a sidewall rubber at a tire maximum width position. A thickness of a clinch is a thickness of the rubber layer measured along a normal line, of a main body part of a carcass, which passes through a point Pc at which the sidewall and the clinch come in contact with each other on a tire outer surface.

A "plasticizing agent" is a material giving a rubber component plasticity and is a component extracted from a rubber composition using acetone. Moreover, examples of the plasticizing agent include a plasticizing agent that is liquid (in a liquid state) at 25°C and a plasticizing agent that is solid at 25°C. However, the plasticizing agent shall not include wax and stearic acid commonly used in the tire industry. A content of a plasticizing agent also includes an amount of a plasticizing agent contained in a rubber component extended with the plasticizing agent.

<Measuring method>

"Procedure X" is a method of calculating a longest relaxation time $T_1$, in hours, of a rubber composition (Masaoki Takahashi, "The Third Lecture of Practical Rheology for Beginners, Dynamic Viscoelasticity of Polymers", Nihon Reoroji Gakkaishi, 2021, Vol. 49, pp.135-146). With reference to the left-side column to the right-side column of page 140 of this literature (Takahashi), a shear elastic modulus G(t) that is a function of time t when a certain minute shear strain is produced is expressed as follows,

$$G(t) = G_1 \exp(-t/T_1) + G_2 \exp(-t/T_2) + \cdots$$

(where $T_1$ represents a longest relaxation time) and this exponential function decreases relatively fast. Therefore, for $t > T_1$, only the term of the longest relaxation time contributes to it. Accordingly, G(t) is approximated as follows,

$$G(t) = G_1 \exp(-t/T_1)$$

and the logarithm of its both sides is taken, thereby obtaining the following equation,

$$\ln G(t) = \ln G_1 - t/T_1.$$

Furthermore, it can be deformed as follows,

$$\log G(t) = \log G_1 - t/(2.303T_1).$$

Thus, the longest relaxation time $T_1$, in hours, can be calculated from a slope of a ln G(t)-to-t semi-logarithmic plot or a log G(t)-to-t semi-logarithmic plot. This method is called Procedure X.

A "longest relaxation time" is measured as follows. That is, for a rubber composition, a sample for measurement having a height of 16 mm, a width of 40 mm, and a thickness of about 2 mm is prepared. A dynamic viscoelasticity measuring device for high frequency DMA+300 manufactured by Metravib is used as a measuring equipment. After the sample for measurement is fixed with film share-type jigs (a gap between the jigs is 2 mm) and is held at a measured temperature (60°C) for 5 minutes, the sample is held while being subjected to shear strain of 10%, and a time change of a shear elastic modulus G(t) is measured every 5 seconds for 20 minutes. A longest relaxation time $T_1$, in hours, is calculated from this measurement result by Procedure X. That is, a semi-logarithmic plot of all the points of ln G(t) for time t in a range from 1000 seconds to 1200 seconds is made, and it is approximated by a liner line using the least squares method, to calculate a longest relaxation time $T_1$, in hours, from its slope ($-(1/T_1)$). Besides, the shear elastic modulus has the same meaning as a relaxation elastic modulus described in the above-described literature (Takahashi).

An "epoxidation rate" is a rate, in mol%, of the number of epoxidized double bonds in an epoxidized diene-based rubber to the total number of double bonds in a rubber before epoxidation and is measured using an NMR device of JNM-ECA series manufactured by JEOL Ltd. Besides, the double bonds disappear due to epoxidation.

A "glass transition temperature (Tg) of a rubber composition" is a temperature corresponding to a maximum value (tan δ peak temperature) within a range of -60°C or more and 40°C or less in a temperature distribution curve of tan δ

obtained by measurement under a condition of a frequency of 10 Hz, an initial strain of 10%, a dynamic strain of ±0.5%, and a temperature rising rate at 2°C/min, using a dynamic viscoelasticity measuring device (e.g., EPLEXOR series manufactured by gabo Systemtechnik GmbH). Besides, in the measurement in the range of -60 to 40°C, if the tan δ value continues to gradually increase or decrease as the temperature rises, the glass transition temperature of the rubber composition shall be 40°C or -60°C, respectively. Moreover, in the range of -60°C or more and 40°C or less, if there are two or more points indicating the maximum value, a point having the lowest temperature shall be a glass transition temperature.

An "$N_2$SA of silica" is measured by a BET method according to ASTM D3037-93.

An "$N_2$SA of carbon black" is measured according to JIS K 6217-2:2017.

An "average primary particle size" can be calculated by making observations with a transmission or scanning electron microscope, measuring 400 or more primary particles observed in the field of view, and averaging them. Regarding the particle size, in a case where the particle is in a substantially circular shape, a diameter of the circle is defined as a particle size, in a case where it is in a needle or rod shape, a minor axis is defined as a particle size, and in the other cases, an equivalent circle diameter calculated from an electron microscope image is defined as a particle size. The equivalent circle diameter is calculated as "the positive square root of 4×(area of particle)/π". It is applied to carbon black, silica, etc.

<Rubber composition>

A rubber composition of the present embodiment comprises a rubber component comprising an epoxidized diene-based rubber, at least one selected from the group consisting of an imidazole compound and a bivalent or higher-valent carboxylic acid compound, and oil.

[Rubber component]

Examples of the epoxidized diene-based rubber include, but not particularly limited to, for example, an epoxidized natural rubber (ENR), an epoxidized isoprene-based rubber such as an epoxidized isoprene rubber and the like, an epoxidized butadiene rubber, an epoxidized butadiene-acrylonitrile rubber, an epoxidized styrene-butadiene rubber, an epoxidized isoprene-butadiene rubber, and the like. The epoxidized diene-based rubber may be used alone, or two or more thereof may be used in combination.

The epoxidized diene-based rubber is not particularly limited and may be a commercially available one or one obtained by epoxidizing a diene-based rubber. Epoxidation of a diene-based rubber can be performed according to epoxidation of a natural rubber.

Examples of a method of epoxidizing a natural rubber include, for example, a chlorohydrin method, a direct oxidation method, a hydrogen peroxide method, an alkyl hydroperoxide method, a peroxy acid method, and the like (JP H04-26617 A, JP H02-110182A, GB 2113692 B, etc.). Examples of the peroxy acid method include, for example, a method of making a natural rubber react with organic peroxy acid such as peracetic acid, performic acid, and the like, etc. Besides, epoxidized natural rubbers with various epoxidation rates can be prepared by adjusting an amount of or a reaction time with organic peroxy acid. The epoxidized natural rubber is not particularly limited, and those common in the tire industry can be used, such as, for example, SIR20, RSS#3, TSR20, a deproteinized natural rubber (DPNR), an ultra pure natural rubber (HPNR), and the like.

The epoxidized diene-based rubber is preferably an ENR, an epoxidized butadiene rubber, or the like, more preferably an ENR, from the viewpoint of practical aspects such as easy availability and the like.

An epoxidation rate of an epoxidized diene-based rubber is preferably greater than 15 mol%, more preferably greater than 20 mol%, further preferably 25 mol% or more. On the other hand, the epoxidation rate is preferably 75 mol% or less, more preferably less than 60 mol%, further preferably 50 mol% or less, further preferably less than 50 mol%, further preferably less than 30 mol%, further preferably 25 mol% or less, from the viewpoint of fracture characteristics. The epoxidation rate is a value measured by the above-described method.

A content of an epoxidized diene-based rubber in 100% by mass of the rubber component is preferably greater than 50% by mass, more preferably 60% by mass or more. The content may be greater than 70% by mass, 80% by mass or more, greater than 90% by mass, or greater than 95% by mass, or may be 100% by mass.

The rubber component may comprise another rubber component other than the above-described epoxidized diene-based rubber. As another rubber component, a cross-linkable rubber component commonly used in the tire industry can be used, examples of which include, for example, a non-epoxidized diene-based rubber, such as a natural rubber (NR), an isoprene-based rubber (IR-based rubber) such as an isoprene rubber (IR) and the like, a styrene-butadiene rubber (SBR), a butadiene rubber (BR), a styrene-isoprene-butadiene copolymer rubber (SIBR), a chloroprene rubber (CR), an acrylonitrile-butadiene rubber (NBR), a polynorbornene rubber, and the like; and a non-diene-based rubber, such as a butyl rubber (IIR), a hydrogenated nitrile rubber (HNBR), an ethylene propylene rubber, a silicone rubber, a

polyethylene chloride rubber, a fluororubber (FKM), an acrylic rubber (ACM), a hydrin rubber, and the like. Among them, the IR-based rubber is preferable, and the NR is particularly preferable. The other rubber components may be used alone, or two or more thereof may be used in combination.

A content of an IR-based rubber is preferably less than 50% by mass or may be 0% by mass. The content is more preferably less than 45% by mass, further preferably 40% by mass or less. Moreover, the content of the IR-based rubber when compounded in the rubber component is greater than 0% by mass, preferably greater than 5% by mass, more preferably greater than 10% by mass, further preferably greater than 15% by mass, further preferably 20% by mass or more.

[Bivalent or higher-valent carboxylic acid compound]

A bivalent or higher-valent carboxylic acid compound is a compound having two or more carboxyl groups. The bivalent or higher-valent carboxylic acid compound is not particularly limited as long as it reacts with an epoxy group of an epoxidized diene-based rubber and can form an ionic bond, and a variety of such carboxylic acid compounds can be used. The bivalent or higher-valent carboxylic acid compound may be any of an aliphatic carboxylic acid compound, an alicyclic carboxylic acid compound, and an aromatic carboxylic acid compound. Moreover, the bivalent or higher-valent carboxylic acid compound may have a substituent. Examples of the substituent of the bivalent or higher-valent carboxylic acid compound include a hydroxy group, an alkoxy group, an amino group, and the like. The number of these substituents may be one, or two or more. Moreover, the number of types of the substituents may be one, or two or more.

Examples of the bivalent or higher-valent carboxylic acid compound include, for example, a bivalent carboxylic acid compound such as a maleic acid, a fumaric acid, a phthalic acid, a malic acid, a tartaric acid, a suberic acid, a dodecanedioic acid, and the like; a trivalent carboxylic acid compound such as a citric acid and the like; a quadrivalent carboxylic acid compound such as a pyromellitic acid and the like; a hexavalent carboxylic acid compound such as a mellitic acid and the like; and the like. Among them, bivalent carboxylic acid compounds such as a suberic acid, a dodecanedioic acid, and the like are preferable.

The bivalent or higher-valent carboxylic acid compound may be used alone, or two or more thereof may be used in combination.

Preferred examples of the bivalent or higher-valent carboxylic acid compound include a bivalent carboxylic acid compound. As a bivalent carboxylic acid compound, a compound expressed by the following formula (I) can be appropriately used. This compound can form a firm network between polymers since carboxyl groups are present at both ends thereof.

$$HOOC\text{-}A\text{-}COOH \qquad (I)$$

(wherein, A is a bivalent hydrocarbon group having 1 to 18 carbon atoms and may have a substituent.)

The hydrocarbon group denoted by A may be any of aliphatic, alicyclic, and aromatic ones. Among the hydrocarbon groups denoted by A, the aliphatic hydrocarbon group and the alicyclic hydrocarbon group may be any of saturated and unsaturated ones. Among the hydrocarbon groups denoted by A, the alicyclic hydrocarbon group and the aromatic hydrocarbon group refer to ones in which carbon atoms forming a ring are not substituted, and these carbon atoms may be substituted by alkyl groups. Among the hydrocarbon groups denoted by A, the aliphatic hydrocarbon group may be any of straight-chain and branched-chain ones. The number of carbon atoms of the hydrocarbon group denoted by A is preferably 2 or more, and it is preferably 12 or less, more preferably 10 or less, further preferably 8 or less, further preferably 6 or less.

Specific examples of the hydrocarbon group denoted by A include, for example, an alkylene group, an alkenylene group, a cycloalkylene group, an arylene group, and the like, and an alkylene group is preferable. Moreover, examples of the alkylene group include a straight-chain alkylene group, such as a methylene group, an ethylene group, an n-propylene group, an n-butylene group, an n-hexylene group (hexamethylene group), an n-decylene (decamethylene group) and the like; and a branched-chain alkylene group, such as an isopropylene group, an isobutylene group, a 2-methylpropylene group, and the like. Among them, a straight-chain alkylene group is preferable, an ethylene group, an n-propylene group, an n-hexylene group (hexamethylene group) and an n-decylene (decamethylene group) are more preferable, and an n-hexylene group (hexamethylene group) and an n-decylene (decamethylene group) are further preferable.

The hydrocarbon group denoted by A may have a substituent. Examples of the substituent include a hydroxy group, an alkoxy group, an amino group, dialkylamino group, and the like. The number of the substituents may be one, or two or more. Moreover, the number of types of the substituents may be one, or two or more.

For the hydrocarbon group denoted by A, an alkyl group, an alkoxy group, and the like are preferably ones having 1 to 6 carbon atoms, more preferably ones having 1 to 4 carbon atoms, further preferably ones having one carbon atom or two carbon atoms.

A content of a bivalent or higher-valent carboxylic acid compound is preferably greater than 0.50 parts by mass,

more preferably greater than 0.60 parts by mass, further preferably greater than 0.70 parts by mass, further preferably greater than 0.80 parts by mass, further preferably greater than 0.90 parts by mass, based on 100 parts by mass of the epoxidized diene-based rubber, from the viewpoint of the effects of the present invention. Moreover, the content is preferably less than 30 parts by mass, more preferably less than 25 parts by mass, further preferably 20 parts by mass or less.

[Imidazole compound]

An imidazole compound refers to a compound having an imidazole ring. The imidazole compound is not particularly limited as long as it can produce an ionic bond by reacting with an epoxy group of an epoxidized diene-based rubber.

A variety of imidazole compounds can be used, and for example, a compound expressed by the following formula (II) is preferable.

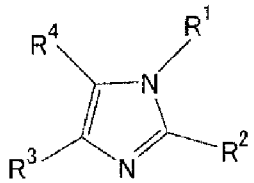

(II)

(wherein, $R^1$, $R^2$, $R^3$, and $R^4$ are the same or different and each represents a hydrogen atom or a hydrocarbon group. $R^3$ and $R^4$ may be bonded to each other to form a ring structure.)

Examples of the hydrocarbon groups of $R^1$, $R^2$, $R^3$, and $R^4$ include, for example, an alkyl group having 1 to 20 carbon atoms, preferably 1 to 12 carbon atoms, more preferably 1 to 6 carbon atoms; a cycloalkyl group having 5 to 24 carbon atoms, preferably 5 to 12 carbon atoms, more preferably 5 to 8 carbon atoms; an aryl group having 6 to 30 carbon atoms, preferably 6 to 24 carbon atoms, more preferably 6 to 12 carbon atoms; an aralkyl group having 7 to 25 carbon atoms, preferably 7 to 13 carbon atoms, more preferably 7 to 10 carbon atoms; and the like.

Moreover, in a case where $R^3$ and $R^4$ are bonded to form a ring structure, examples of a ring structure formed by $R^3$, $R^4$, and carbon atoms of an imidazole ring include, for example, an aromatic ring, a heterocycle, and an aliphatic ring each having 5 to 12 carbon atoms, and the like, and preferably include a benzene ring.

From the viewpoint of the effects of the present invention, it is preferable that at least one of $R^1$, $R^2$, $R^3$, and $R^4$ is an alkyl group, it is more preferable that two of $R^1$, $R^2$, $R^3$, and $R^4$ are alkyl groups and the other two of them are hydrogen atoms, and it is further preferable that $R^1$ and $R^2$ are alkyl groups and $R^3$ and $R^4$ are hydrogen atoms.

Specific examples of the imidazole compound include imidazole, 1-methylimidazole, 1-butylimidazole, 1-propylimidazole, 1-ethylimidazole, 1,2-dimethylimidazole, 1-decyl-2-methylimidazole, 1-benzyl-2-methylimidazole, benzimidazole, N-methylbenzimidazole, and the like. The imidazole compound may be used alone, or two or more thereof may be used in combination.

Among them, imidazole, 1,2-dimethylimidazole, 1-methylimidazole, and 1-benzyl-2-methylimidazole are preferable, and imidazole and 1,2-dimethylimidazole are particularly preferable.

The imidazole compound may be used alone, or two or more thereof may be used in combination.

As an imidazole compound, for example, products from SHIKOKU CHEMICALS CORPORATION, etc. can be used.

A content of an imidazole compound based on 100 parts by mass of the epoxidized diene-based rubber is preferably greater than 0.50 parts by mass, more preferably greater than 0.60 parts by mass, further preferably greater than 0.70 parts by mass, further preferably greater than 0.80 parts by mass, further preferably greater than 0.85 parts by mass, from the viewpoint of the effects of the present invention. Moreover, the content is preferably less than 30 parts by mass, more preferably less than 25 parts by mass, further preferably 20 parts by mass or less.

[Oil]

Examples of oil include, for example, process oils, vegetable oils, animal oils, and the like. Examples of the process oils include paraffinic process oils (mineral oils), naphthenic process oils, aromatic process oils, and the like. Specific examples of the process oils include, for example, MES (Mild Extracted Solvate), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, process oils having a low content of a polycyclic aromatic compound (PCA) can also be used. Examples of the process oils having a low content of a PCA include MES, TDAE, heavy naphthenic oil, and the like. Moreover, from the viewpoint of a life cycle assessment, one obtained by refining a waste oil

after use for a rubber mixing machine or an engine or waste cooking oil used in a cooking facility may also be used. The oil may be used alone, or two or more thereof may be used in combination.

Examples of the vegetable oils include, for example, a linseed oil, a rapeseed oil, a safflower oil, a soybean oil, a corn oil, a cottonseed oil, a rice bran oil, a tall oil, a sesame oil, perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oils also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oils, a waste cooking oil obtained by recovering what was utilized as an edible oil, etc., and the like. Besides, the vegetable oil may be liquid or solid at normal temperature (25°C).

The vegetable oil preferably comprises acylglycerol, and more preferably comprises triacylglycerol. Besides, in the present specification, acylglycerol refers to a compound in which a hydroxy group of glycerin and a fatty acid are ester-bonded. The acylglycerol is not particularly limited and may be 1-monoacylglycerol, 2-monoacylglycerol, 1, 2-diacylglycerol, 1, 3-diacylglycerol, or triacylglycerol. Furthermore, the acylglycerol may be a monomer, a dimer, or a multimer that is a trimer or higher. Besides, acylglycerol that is a dimer or higher can be obtained by thermal polymerization, oxidative polymerization, or the like. Moreover, the acylglycerol may be liquid or solid at normal temperature (25°C).

Whether the rubber composition comprises the above-described acylglycerol can be confirmed by, but not particularly limited to, $^1$H-NMR measurement. For example, a heavy chloroform in which a rubber composition containing triacylglycerol is immersed at normal temperature (25°C) for 24 hours and then removed is subjected to $^1$H-NMR measurement at room temperature, and signals near 5.26 ppm, near 4.28 ppm, and near 4.15 ppm are observed under a condition that a signal of tetramethylsilane (TMS) is set to 0.00 ppm. These signals are presumed to be derived from hydrogen atoms bonded to carbon atoms adjacent to oxygen atoms of the ester group. Besides, "near" in this paragraph shall be a range of $\pm$0.10 ppm.

The above-described fatty acid is not particularly limited and may be an unsaturated fatty acid or a saturated fatty acid. Examples of the unsaturated fatty acid include monounsaturated fatty acids such as oleic acid and the like; and polyunsaturated fatty acids such as linoleic acid, linolenic acid, and the like. Moreover, examples of the saturated fatty acid include butyric acid, lauric acid, and the like.

Among them, as the above-described fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid or a vegetable oil refined by transesterification or the like may be used. Moreover, in order to produce a vegetable oil comprising such fatty acid, a plant may be improved by selective breeding, gene recombination, genome editing, or the like.

As a vegetable oil, for example, those commercially available from Idemitsu Kosan Co., Ltd., Sankyo Yuka Kogyo K. K., ENEOS Corporation, Olisoy, H&R Group, HOKOKU Corporation, Fuji Kosan Co., Ltd., The Nisshin Oillio Group, etc. can be used.

Examples of the animal oils include fish oils, beef tallow, whale oil, oleyl alcohol that can be derived therefrom, and the like.

A content of oil when compounded based on 100 parts by mass of the rubber component is preferably greater than 5 parts by mass, more preferably greater than 10 parts by mass, further preferably 15 parts by mass or more. Moreover, the content is preferably less than 50 parts by mass, more preferably less than 40 parts by mass, further preferably less than 30 parts by mass. The content of oil also includes an amount of extending oil used for extension of the rubber component or the like.

[Other components]

As components other than the above-described components, various compounding agents and additives common in the tire industry, such as a filler such as carbon black, silica, and the like, a silane coupling agent, a plasticizing agent other than oil, antioxidant, wax, stearic acid, zinc oxide, a vulcanizing agent, a vulcanization accelerator, and the like, can be compounded in the rubber composition. However, neither the filler nor the silane coupling agent is essential for the rubber composition of the present embodiment, and the rubber composition may not comprise those. Moreover, vulcanization-related chemicals like vulcanizing agents and vulcanization accelerators are not essential for the rubber composition of the present embodiment, and the rubber composition may not comprise those.

(Filler)

The rubber composition can comprise a filler, and a content of the filler is preferably less than 45 parts by mass, more preferably less than 20 parts by mass, further preferably less than 5 parts by mass, based on 100 parts by mass of the

rubber component, or the rubber composition may not comprise any filler. The content of the filler is a total content of the filler, and in a case where the rubber composition comprises only one type of filler, the content of the filler is a content of the one type of filler.

Silica or carbon black can be used as a filler. Additionally, fillers commonly used in the tire industry can also be used, such as, for example, aluminum hydroxide, alumina (aluminum oxide), calcium carbonate, magnesium sulfate, talc, clay, and the like. Silica and carbon black are representatives of fillers. The filler may be used alone, or two or more thereof may be used in combination.

«Silica»

Silica is not particularly limited, and those common in the tire industry can be used, such as, for example, silica prepared by a dry process (anhydrous silica), silica prepared by a wet process (hydrous silica), and the like. Among them, hydrous silica prepared by a wet process is preferable for the reason that it has many silanol groups. The silica may be used alone, or two or more thereof may be used in combination.

A nitrogen adsorption specific surface area ($N_2SA$) of silica is preferably greater than 140 $m^2/g$, more preferably greater than 150 $m^2/g$, further preferably 160 $m^2/g$ or more, particularly preferably 175 $m^2/g$ or more, from the viewpoints of fuel efficiency and abrasion resistance. Moreover, it is preferably less than 350 $m^2/g$, more preferably less than 300 $m^2/g$, further preferably less than 250 $m^2/g$, from the viewpoints of fuel efficiency and processability. Besides, the $N_2SA$ of the silica is measured by the above-described measuring method.

An average primary particle size of silica is preferably smaller than 25 nm, more preferably smaller than 22 nm, further preferably smaller than 20 nm. A lower limit of the average primary particle size is, but not particularly limited to, preferably larger than 1 nm, more preferably larger than 3 nm, further preferably larger than 5 nm. Besides, the average primary particle size can be calculated by the above-described measuring method.

<<Carbon black>>

Carbon black is not particularly limited, and those common in the tire industry can be used, such as GPF, FEF, HAF, ISAF, SAF, and the like. Specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used in addition to them. The carbon black may be used alone, or two or more thereof may be used in combination.

A nitrogen adsorption specific surface area ($N_2SA$) of carbon black is preferably 10 $m^2/g$ or more, more preferably 20 $m^2/g$ or more, further preferably 35 $m^2/g$ or more, particularly preferably 50 $m^2/g$ or more, from the viewpoint of reinforcing property. Moreover, it is preferably 200 $m^2/g$ or less, more preferably 150 $m^2/g$ or less, further preferably 130 $m^2/g$ or less, from the viewpoints of fuel efficiency and processability. Besides, the $N_2SA$ of the carbon black is measured by the above-described measuring method.

An average primary particle size of carbon black is preferably smaller than 30 nm, more preferably smaller than 26 nm, further preferably smaller than 23 nm, further preferably 22 nm or smaller. Moreover, a lower limit of the average primary particle size is, but not particularly limited to, preferably larger than 1 nm, more preferably larger than 3 nm, further preferably larger than 5 nm. Besides, the average primary particle size can be calculated by the above-described method.

(Silane coupling agent)

Silica is preferably used in combination with a silane coupling agent. The silane coupling agent is not particularly limited, and any silane coupling agent conventionally used in combination with silica in the tire industry can be used, such as, for example, mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; sulfide-based silane coupling agents such as bis(3-triethoxysilylpropyl)disulfide, bis(3-triethoxysilylpropyl)tetrasulfide, and the like; thioester-based silane coupling agents such as 3-octanoylthio-1-propyltriethoxysilane, 3-hexanoylthio-1-propyltriethoxysilane, 3-octanoylthio-1-propyltrimethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxysilane, and the like; and the like. Among them, a sulfide-based silane coupling agent and/or a mercapto-based silane coupling agent are preferably compounded in the rubber composition. As the silane coupling agent, for example, those commercially available from Momentive

Performance Materials, etc. can be used. The silane coupling agents may be used alone, or two or more thereof may be used in combination.

A content of a silane coupling agent is preferably greater than 1.0 parts by mass, more preferably greater than 3.0 parts by mass, further preferably greater than 5.0 parts by mass, based on 100 parts by mass of the silica, from the viewpoint of enhancing dispersibility of the silica. Moreover, it is preferably less than 30 parts by mass, more preferably less than 20 parts by mass, further preferably less than 15 parts by mass, from the viewpoints of cost and processability.

(Plasticizing agent)

Examples of the plasticizing agent other than oil include a liquid polymer, a resin component, and an ester-based plasticizing agent, and the like. These plasticizing agents, including the above-described oil, may be ones derived from petroleum, ones derived from biomass, or ones derived from naphtha recycled from a rubber product or non-rubber product. Moreover, low-molecular-weight hydrocarbon components obtained by pyrolyzing used tires or products containing various components and performing extraction from the pyrolysate may be used as plasticizing agents. The plasticizing agents may be used alone, or two or more thereof may be used in combination.

<<Resin component>>

The rubber composition relating to the present embodiment may comprise a resin component in combination. The resin component that can be used in the present embodiment is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. These resin components may be used alone, or two or more thereof may be used in combination. Each resin component may also be used alone, or two or more thereof may be used in combination, respectively.

C9-based resin

A "C9-based resin" refers to a resin obtained by polymerizing C9 fractions, and may be a polymer obtained by polymerizing a C9 fraction alone or a copolymer obtained by copolymerizing a C9 fraction with other components. For example, a resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

C5-based resin

A "C5-based resin" refers to a resin obtained by polymerizing C5 fractions and may be one obtained by hydrogenating or modifying them. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

C5/C9-based resin

A "C5/C9-based resin" refers to a resin obtained by copolymerizing the C5 fraction and the C9 fraction and may be one obtained by hydrogenating or modifying them. As the C5/C9-based petroleum resin, for example, those commercially available from Tosoh Corporation, Zibo Luhua Hongjin New Material Group Co., Ltd, etc. can be appropriately used.

Dicyclopentadiene-based resin

A "dicyclopentadiene-based resin" refers to a resin comprising cyclopentadiene (CPD) and/or dicyclopentadiene (DCPD) as a monomer component having the largest content and may be one obtained by hydrogenating or modifying them. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil

Corporation, ENEOS Corporation, Zeon Corporation, Maruzen Petrochemical Co., Ltd., etc. can be used.

Aromatic vinyl-based resin

An "aromatic vinyl-based resin" refers to a resin comprising an aromatic vinyl compound such as styrene, α-methylstyrene, vinyltoluene, p-chlorostyrene, and the like as a monomer component having the largest content, and may be one obtained by hydrogenating or modifying them. As the aromatic vinyl-based resin, a homopolymer of α-methylstyrene or styrene or a copolymer of α-methylstyrene and styrene is preferable, and a copolymer of α-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

Coumarone-based resin

A "coumarone-based resin" refers to a resin comprising coumarone as a monomer component and may be one obtained by hydrogenating or modifying it. As the coumarone-based resin, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

Indene-based resin

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

Terpene-based resin

A "terpene-based resin" refers to a resin comprising a terpene compound such as α-pinene, β-pinene, limonene, dipentene, and the like as a monomer component, and may be one obtained by hydrogenating or modifying them. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, α-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

Rosin-based resin

A "rosin-based resin" refers to a resin comprising a rosin acid compound such as abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

Phenol-based resin

A "phenol-based resin" refers to a resin comprising a phenolic compound such as phenol, cresol, and the like as a monomer component, and may be one obtained by hydrogenating or modifying them. Examples of the phenol-based resin include, but not particularly limited to, a phenol formaldehyde resin, an alkylphenol formaldehyde resin, an alkylphenol

acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

<<Liquid polymer>>

The liquid polymer is not particularly limited as long as it is a polymer in a liquid state at normal temperature (25°C), examples of which include, for example, a liquid butadiene rubber (liquid BR), a liquid styrene-butadiene rubber (liquid SBR), a liquid isoprene rubber (liquid IR), a liquid styrene-isoprene rubber (liquid SIR), a liquid farnesene rubber, and the like. The liquid polymer may be used alone, or two or more thereof may be used in combination.

A content of a liquid polymer when compounded based on 100 parts by mass of the rubber component is preferably greater than 5 parts by mass, more preferably greater than 10 parts by mass, further preferably 15 parts by mass or more. Moreover, the content is preferably less than 50 parts by mass, more preferably less than 40 parts by mass, further preferably less than 30 parts by mass. The content of a liquid polymer also includes an amount of an extending liquid polymer used for extension of the rubber component or the like.

<<Ester-based plasticizing agent>>

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

A content of an ester-based plasticizing agent based on 100 parts by mass of the rubber component is preferably greater than 5 parts by mass, more preferably greater than 10 parts by mass, further preferably 15 parts by mass or more. Moreover, the content is preferably less than 50 parts by mass, more preferably less than 40 parts by mass, further preferably less than 30 parts by mass. The content of an ester-based plasticizing agent also includes an amount of an extending ester-based plasticizing agent or the like used for extension of the rubber component.

(Antioxidant)

Examples of the antioxidant include, but not particularly limited to, a naphthylamine-based antioxidant such as phenyl-$\alpha$-naphthylamine and the like; a diphenylamine-based antioxidant such as octylated diphenylamine, 4,4'-bis($\alpha$,$\alpha$'-dimethylbenzyl)diphenylamine, and the like; a p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline, and the like; a monophenol-based antioxidant such as 2,6-di-t-butyl-4-methylphenol, styrenated phenol, and the like; bisphenol-based, trisphenol-based, and polyphenol-based antioxidants such as tetrakis-[methylene-3-(3',5'-di-t-butyl-4'-hydroxyphenyl) propionate]methane and the like; and the like. Among them, the p-phenylenediamine-based antioxidant and the quinoline-based antioxidant are preferable, and N-(1,3-dimethylbutyl)-N'-phenyl-p-phenylenediamine and a polymer of 2,2,4-trimethyl-1,2-dihydroquinoline are more preferable. As the commercially-available product, for example, products from Seiko Chemical Co., Ltd., Sumitomo Chemical Co., Ouchi Shinko Chemical Industry Co., Flexsys, etc. can be used. The antioxidants may be used alone, or two or more thereof may be used in combination.

A content of an antioxidant when compounded based on 100 parts by mass of the rubber component is preferably greater than 0.5 parts by mass, more preferably greater than 1.0 parts by mass, further preferably greater than 1.5 parts by mass, from the viewpoint of ozone crack resistance of a rubber. Moreover, it is preferably less than 10 parts by mass, more preferably less than 8.0 parts by mass, further preferably less than 5.0 parts by mass, from the viewpoints of abrasion resistance and wet grip performance.

(Wax)

Wax is not particularly limited, and any of those commonly used in the tire industry can be appropriately used. Examples of the wax include, for example, a petroleum-based wax, a mineral-based wax, a synthetic wax, a plant-derived wax, and the like. Among them, the petroleum-based wax and the plant-derived wax are preferable, and the petroleum-based wax is more preferable. Examples of the plant-derived wax include, for example, a rice bran wax, a carnauba wax, a

candelilla wax, and the like. Examples of the petroleum-based wax include, for example, a paraffin wax, a microcrystalline wax, a specially selected wax thereof, and the like, and the paraffin wax is preferable. Besides, the wax relating to the present embodiment shall not include stearic acid. As wax, for example, those commercially available from Ouchi Shinko Chemical Industry Co., Nippon Seiro Co., Ltd., PARAMELT, etc. can be used. The wax may be used alone, or two or more thereof may be used in combination.

A content of wax when compounded based on 100 parts by mass of the rubber component is preferably greater than 0.5 parts by mass, more preferably greater than 1.0 parts by mass, further preferably greater than 1.5 parts by mass, from the viewpoint of weather resistance of a rubber. Moreover, it is preferably less than 10 parts by mass, more preferably less than 7.0 parts by mass, further preferably less than 5.0 parts by mass, from the viewpoint of prevention of whitening of a tire due to bloom.

(Stearic acid)

A content of stearic acid when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 8.0 parts by mass, further preferably less than 5.0 parts by mass, from the viewpoint of vulcanization rate.

(Zinc oxide)

A content of zinc oxide when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 8.0 parts by mass, further preferably less than 5.0 parts by mass, from the viewpoint of abrasion resistance.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used. The vulcanizing agent can be used alone, or two or more thereof can be used in combination.

A content of sulfur when compounded based on 100 parts by mass of the rubber component is preferably greater than 0.5 parts by mass, more preferably greater than 1.0 parts by mass, further preferably greater than 1.5 parts by mass, from the viewpoint of securing a sufficient vulcanization reaction. Moreover, it is preferably less than 10 parts by mass, more preferably less than 8.0 parts by mass, further preferably less than 5.0 parts by mass, from the viewpoint of prevention of deterioration. A content of a vulcanizing agent when an oil-containing sulfur is used as the vulcanizing agent is defined as a total content of pure sulfur contained in the oil-containing sulfur.

A known organic crosslinking agent can also be used as a vulcanizing agent other than sulfur. Although the organic crosslinking agent is not particularly limited as long as it can be form a crosslinking chain other than polysulfide bond, examples of the organic crosslinking agent include, for example, an alkylphenol-sulfur chloride condensate, sodium hexamethylene-1,6-bisthiosulfate dihydrate, 1,6-bis(N,N'-dibenzylthiocarbamoyldithio)hexane, dicumyl peroxide, and the like, and 1,6-bis(N,N'-dibenzylthiocarbamoyldithio)hexane is preferable. As these organic crosslinking agents, those commercially available from Taoka Chemical Co., Ltd., LANXESS, Flexsys, etc. can be used.

(Vulcanization accelerator)

Examples of the vulcanization accelerator include, but not particularly limited to, for example, a sulfenamide-based vulcanization accelerator, a thiazole-based vulcanization accelerator, a guanidine-based vulcanization accelerator, a thiuram-based vulcanization accelerator, a thiourea-based vulcanization accelerator, a dithiocarbamic acid salt-based vulcanization accelerator, an aldehyde-amine-based vulcanization accelerator, an aldehyde-ammonia-based vulcanization accelerator, an imidazoline-based vulcanization accelerator, a xanthate-based vulcanization accelerator, caprolactam disulfide, and the like. These vulcanization accelerators may be used alone, or two or more thereof may be used in combination. Among them, from the viewpoint that the desired effects can be more appropriately obtained, one or more vulcanization accelerators selected from the group consisting of a sulfenamide-based vulcanization accelerator, a thiazole-based vulcanization accelerator, and a guanidine-based vulcanization accelerator are preferable. The vulcanization accelerators may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N-dicyclohexyl-2-benzothiazolyl sulfenamide (DCBS), and the like.

Examples of the thiazole-based vulcanization accelerator include, for example, 2-mercaptobenzothiazole (MBT) or salt thereof, di-2-benzothiazolyl disulfide (MBTS), 2-(2,4-dinitrophenyl)mercaptobenzothiazole, 2-(2,6-diethyl-4-morpholinothio)benzothiazole, and the like.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatechol borate, 1,3-di-o-cumenyl guanidine, 1,3-di-o-biphenyl guanidine, 1,3-di-o-cumenyl-2-propionyl guanidine, and the like.

Examples of the thiuram-based vulcanization accelerator include, for example, tetrakis(2-ethylhexyl) thiuram disulfide (TOT-N), tetramethylthiuram disulfide (TMTD), tetraethylthiuram disulfide, tetramethylthiuram monosulfide (TMTM), dipentamethylenethiuram disulfide, dipentamethylenethiuram tetrasulfide, and the like.

Examples of the thiourea-based vulcanization accelerator include, for example, a thiourea compound such as thiocarbamide, diethylthiourea, dibutylthiourea, trimethylthiourea, diorthotolylthiourea, and the like; N, N'-diphenylthiourea; trimethylthiourea; N,N'-diethylthioure; and the like

Examples of the dithiocarbamic acid salt-based vulcanization accelerator include, for example, piperidinium pentamethylenedithiocarbamate (PPDC), zinc dimethyldithiocarbamate (ZnMDC), zinc diethyldithiocarbamate (ZnEDC), zinc dibutyldithiocarbamate (ZnBCD), zinc dibenzyldithiocarbamate (ZDBzC), zinc N-ethyl-N-phenyl dithiocarbamate (ZnEPDC), zinc N-pentamethylene dithiocarbamate (ZnPDC), sodium dibutyldithiocarbamate (NaBCD), copper dimethyldithiocarbamate (CuMDC), ferric dimethyldithiocarbamate (FeMDC), tellurium diethyldithiocarbamate (TeEDC), and the like.

A content of a vulcanization accelerator when compounded based on 100 parts by mass of the rubber component is preferably greater than 0.5 parts by mass, more preferably greater than 1.0 parts by mass, further preferably greater than 1.5 part by mass. Moreover, the content is preferably less than 10 parts by mass, more preferably less than 8.0 parts by mass, further preferably less than 5.0 parts by mass.

In the present specification, various materials each having a carbon atom (for example, a rubber, oil, a resin component, a vulcanization accelerator, an antioxidant, a surfactant, and the like) may be derived from carbon dioxide in the atmosphere. These various materials which are compounding substances can be obtained by converting carbon dioxide directly or converting methane obtained via a process of methanation by which methane is synthesized from carbon dioxide.

<Physical properties of rubber composition>

[$A_0/T_1$]

A value of $A_0/T_1$ is preferably 0.050 or more, more preferably 0.090 or more, further preferably 0.100 or more, further preferably 0.200 or more, further preferably 0.300 or more, further preferably 0.500 or more, further preferably 1.000 or more, from the viewpoint of the effects of the present invention. On the other hand, the value of $A_0/T_1$ is preferably 50 or less, more preferably 30 or less, further preferably 10 or less, further preferably 5 or less, further preferably 3 or less.

$A_0$ can be increased or decreased by increasing or decreasing an amount of oil compounded in the rubber composition. On the other hand, $T_1$ can be increased or decreased by adjusting a cross-linking density by adjustment of a time period for which and a temperature at which an uncured rubber composition is heated and pressurized. Therefore, $A_0/T_1$ can be adjusted by a combination of those.

[Tg]

A glass transition temperature (Tg) of the rubber composition of the present embodiment is preferably -45°C or lower. Tg is more preferably lower than -50°C, further preferably lower than -60°C. A lower limit of Tg is not particularly limited and is usually about -100°C.

Tg can be appropriately adjusted depending on types or compounding amounts of the above-described rubber components, fillers, plasticizing agents, and the like. For example, it can be decreased by decreasing a grass transition point of the rubber component, and the like. Conversely, it can be increased by increasing a grass transition point of the rubber component, and the like.

<Tire>

The rubber composition can be used for a tire member composed of the rubber composition and for a tire comprising the tire member. Examples of the tire member includes, but not particularly limited to, for example, a cap tread, a base tread, a sidewall, a clinch, and the like. Among them, the rubber composition is preferably used for the cap tread because it shows an excellent grip performance.

The tire of the present embodiment will be described below with reference to the drawings. However, the tire of the

present embodiment is not limited by the drawings.

FIG. 1 is a cross-sectional view of a tire taken along a plane passing through a tire rotation axis and shows the upper half part on the right side with respect to a tire center line CL. A tire 1 in FIG. 1 comprises: a tread 2 having a tread surface that touches the ground; a sidewall 3; a wing 4 sandwiched between the tread 2 and the sidewall 3; a clinch 5 extending from one end of the sidewall to a rim; a band 6 arranged on an inner side of the tread in a tire radial direction; a breaker 7 arranged on a further inner side of the band in the tire radial direction; a carcass 8 arranged on a further inner side of the breaker in the tire radial direction; and an inner liner 9 arranged on a further inner side of the carcass in the tire radial direction. The tread 2 consists of a cap tread 2a and a base tread 2b. In FIG. 1, $W_{T1}$ represents a thickness of the cap tread, $W_{T2}$ represents a thickness of the base tread, Ws represents a thickness of the sidewall, and Wc represents a thickness of the clinch.

## [$A_0 \times W/T_1$]

For the tire of the present embodiment, when a thickness, in mm, of a tire member is referred to as W, a product ($A_0 \times W/T_1$) of $A_0/T_1$ and W is preferably 0.180 or more.

A value of $A_0 \times W/T_1$ is preferably 0.200 or more, more preferably 0.360 or more, further preferably 0.400 or more, further preferably 0.700 or more, further preferably 0.800 or more, further preferably 1.150 or more, further preferably 1.500 or more, further preferably 2.000 or more, further preferably 2.200 or more, further preferably 4.000 or more, further preferably 4.100 or more, from the viewpoint of the effects of the present invention. On the other hand, the value of $A_0 \times W/T_1$ is preferably 100.0 or less, more preferably 50.00 or less, more preferably 30.00 or less, further preferably 10.00 or less, further preferably 7.000 or less, further preferably 5.000 or less.

W can be increased or decreased by increasing or decreasing a thickness of a relevant tire member. A value of $A_0/T_1$ can be adjusted as described above. Therefore, a value of $A_0 \times W/T_1$ can be adjusted by a combination of those.

[Thickness of tire member]

A thickness of the tire member is not particularly limited and may be a usual thickness.

(Thickness of tread)

A total thickness of the treads is, for example, preferably 30.0 mm or smaller, more preferably 25.0 mm or smaller, further preferably 20.0 mm or smaller, particularly preferably 15.0 mm or smaller. Moreover, the thickness is more preferably 3.0 mm or larger, more preferably 5.0 mm or larger, further preferably 6.0 mm or larger.

A rate of the thickness of the cap tread to the total thickness of the treads is, for example, 20% or more, and can be 30% or more, 40% or more, 50% or more, or 60% or more. On the other hand, the rate can be, for example, 90% or less or 85% or less. Moreover, a rate of the thickness of the base tread to the total thickness of the treads is, for example, 5% or more. and can be 10% or more or 15% or more. On the other hand, the rate can be 80% or less, 70% or less, 60% or less, 50% or less, or 40% or less. A rate of a thickness of an intermediate rubber layer to the total thickness of the treads when the intermediate rubber layer is present can be, for example, 1% or more, 5% or more, or 10% or more. On the other hand, the rate can be 60% or less, 40% or less, or 35% or less.

(Thickness of sidewall)

A thickness of the sidewall is preferably 1.0 mm or larger. The thickness is more preferably 1.2 mm or larger, further preferably 1.4 mm or larger, further preferably 1.5 mm or larger. On the other hand, the thickness of the sidewall is preferably 30.0 mm or smaller, more preferably 20.0 mm or smaller, further preferably 10.0 mm or smaller, further preferably 8.0 mm or smaller.

(Thickness of clinch)

A thickness of the clinch is preferably 2.0 mm or larger, more preferably 2.5 mm or larger, further preferably 3.0 mm or larger, further preferably 3.5 mm or larger. On the other hand, the thickness is preferably 10.0 mm or smaller, more preferably 8.0 mm or smaller, further preferably 7.0 mm or smaller, further preferably 6.0 mm or smaller.

<Production>

[Production of rubber composition]

The rubber composition of the present embodiment can be produced by a known method. For example, it can be produced by kneading the above-described components with a rubber kneading machine such as an open roll, a sealed type kneader (a Banbury mixer, a kneader, etc.), and the like. Examples of the kneading step include, for example, a method of kneading at a discharge temperature of 150°C to 170°C for 3 to 10 minutes. The kneading step can also be performed to be divided into a plurality of steps, if desired. A condition for each kneading step in this case can be appropriately set by a person skilled in the art.

[Production of tire]

The rubber composition for tire as obtained above in an uncured state is extruded into a shape of a desired tire member, which is then attached with other tire members for molding on a tire forming machine to prepare an uncured tire by a usual method. This uncured tire is heated and pressurized in a heating and pressurizing machine, whereby the tire of the present embodiment can be obtained. Examples of heating and pressurizing conditions include, but not particularly limited to, for example, a method of heating and pressurizing at 140°C to 200°C for 15 to 180 minutes.

<Application>

In the present specification, the tire comprising a tire member composed of the rubber composition can be used as any tire, regardless of whether the tire is a pneumatic tire or a non-pneumatic tire, but it can be appropriately used as a pneumatic tire. Moreover, the tire can be used for various applications such as a tire for a passenger car, a tire for a large passenger car, a tire for a large SUV, a racing tire, a heavy-duty tire for a truck/bus and the like, a run-flat tire, a motorcycle tire, and the like. Besides, the "tire for a passenger car" refers to a tire that is presupposed to be mounted to a vehicle running with four wheels and that has a maximum load capacity of less than 1400 kg. Moreover, the "heavy-duty tire" refers to a tire having a maximum load capacity of 1400 kg or more. Moreover, in the present specification, the tire can be used as an all-season tire and a summer tire, as well as a winter tire such as a studless tire.

EXAMPLE

Hereinafter, examples considered to be preferable in implementing the present invention (Examples) will be described, though the scope of the present invention is not limited to only these Examples. Results, which are calculated based on evaluation methods described below considering a rubber composition obtained in accordance with Table 1 using various chemicals described below, are shown in Table 1.

<Various chemicals>

Epoxidized diene-based rubber 1: ENR25 (epoxidized natural rubber having an epoxidation rate of 25 mol%, manufactured by Kumpulan Guthrie Berhad)
Epoxidized diene-based rubber 2: ENR50 (epoxidized natural rubber having an epoxidation rate of 50 mol%, manufactured by Kumpulan Guthrie Berhad)
Isoprene-based rubber (IR-based rubber): TSR20 (natural rubber)
Imidazole compound 1: Imidazole (manufactured by Tokyo Chemical Industry Co, Ltd.)
Imidazole compound 2: 1,2-dimethylimidazole (manufactured by SHIKOKU CHEMICALS CORPORATION)
Imidazole compound 3: 1-benzyl-2-methylimidazole (manufactured by Sigma-Aldrich Co. LLC)
Carboxylic acid compound 1: Suberic acid (bivalent carboxylic acid, manufactured by Tokyo Chemical Industry Co, Ltd.)
Carboxylic acid compound 2: Dodecanedioic Acid (bivalent carboxylic acid, manufactured by Sigma-Aldrich Co. LLC)
Carbon black: N234 (name according to ASTM D-1765 standards)
Silica: Zeosil 1165MP (manufactured by Rhodia Japan K. K., $N_2SA$: 160 $m^2/g$)
Silane coupling agent: Triethoxyoctylsilane (manufactured by Degussa AG)
Antioxidant: N-(1,3-dimethylbutyl)-N-phenyl-p-phenylenediamine (Santoflex 6-PPD manufactured by Flexsys)
Oil: Diana process PS-32 (mineral oil manufactured by Idemitsu Kosan Co., Ltd.)

Examples and Comparative examples

According to the compounding formulation shown in Tables 1 and 2, using a 1.7 L closed Banbury mixer, various chemicals are kneaded at 150°C for 5 minutes, to obtain a kneaded product.

The obtained uncured rubber composition is extruded into a shape of a cap tread, which is attached with other tire members to prepare an unvulcanized tire, which is then heated and pressurized under a condition shown in Tables 1 and 2, thereby obtaining a test tire (195/65R15).

<Longest relaxation time>

A sample for measurement having a height of 16 mm, a width of 40 mm, and a thickness of about 2 mm is cut out from a cap tread of a test tire. A dynamic viscoelasticity measuring device for high frequency DMA+300 manufactured by Metravib is used as a measuring equipment. After the sample for measurement is fixed with film share-type jigs (a gap between the jigs is 2 mm) and is held at a measured temperature (60°C) for 5 minutes, the sample is held while being subjected to shear strain of 10%, and a time change of a shear elastic modulus G(t) is measured every 5 seconds for 20 minutes. A longest relaxation time $T_1$, in hours, is calculated from this measurement result by Procedure X. That is, a semi-logarithmic plot of all the points of ln G(t) for time points t in a range from 1000 seconds to 1200 seconds is made, and it is approximated by a liner line using the least squares method, to calculate a longest relaxation time $T_1$, in hours, from its slope $(-(1/T_1))$.

<Grip performance>

Each test tire is mounted on all wheels of a vehicle (a domestic FF vehicle with a displacement of 2000 cc), and a braking distance at an initial speed of 100 km/h on a dry asphalt road surface is measured, and the braking distance is indicated as an index with a braking distance of the reference Comparative example being as 100. The results show that the higher the grip performance index is, the shorter the braking distance is and more excellent the grip performance is.

Table 1

| | Example | | | | | | | | |
|---|---|---|---|---|---|---|---|---|---|
| | 1 | 2 | 3 | 4 | 5 | 6 | 7 | 8 | 9 |
| Compounding amount (parts by mass) | | | | | | | | | |
| Epoxidized diene-based rubber 1 | 80 | 80 | 80 | 60 | 60 | 80 | 100 | 100 | 100 |
| Epoxidized diene-based rubber 2 | - | - | - | - | - | - | - | - | - |
| Isoprene-based rubber | 20 | 20 | 20 | 40 | 40 | 20 | - | - | - |
| Imidazole compound 1 | 8 | - | - | - | - | - | 8 | - | - |
| Imidazole compound 2 | - | - | - | - | - | 0.87 | - | - | - |
| Imidazole compound 3 | - | - | - | - | - | - | - | - | - |
| Carboxylic acid compound 1 | - | - | - | - | - | 0.96 | - | - | - |
| Carboxylic acid compound 2 | - | 10 | 20 | 10 | 20 | - | - | 10 | 20 |
| Carbon black | - | - | - | - | - | - | - | - | - |
| Silica | - | - | - | - | - | - | - | - | - |
| Silane coupling agent | - | - | - | - | - | - | - | - | - |
| Antioxidant | - | - | - | - | - | - | - | - | - |
| Oil | 5 | 5 | 5 | 5 | 5 | 5 | 15 | 15 | 15 |
| Temperature in heating and pressurizing (°C) | 160 | 170 | 170 | 170 | 170 | 170 | 160 | 170 | 170 |
| Time spent in heating and pressurizing (minutes) | 45 | 20 | 20 | 20 | 20 | 60 | 45 | 20 | 20 |

(continued)

| | Example | | | | | | | | |
|---|---|---|---|---|---|---|---|---|---|
| | 1 | 2 | 3 | 4 | 5 | 6 | 7 | 8 | 9 |
| Compounding amount (parts by mass) | | | | | | | | | |
| Thickness W of cap tread (mm) | 4.0 | 4.0 | 4.0 | 4.0 | 4.0 | 4.0 | 4.0 | 4.0 | 4.0 |
| $A_0/T_1$ | 0.210 | 0.045 | 0.391 | 0.204 | 0.292 | 0.095 | 1.042 | 0.558 | 0.241 |
| $A_0 \times W/T_1$ | 0.840 | 0.180 | 1.564 | 0.816 | 1.168 | 0.380 | 4.168 | 2.232 | 0.964 |
| Grip performance index | 119 | 105 | 133 | 118 | 122 | 111 | 147 | 127 | 114 |

Table 2

| | Comparative example | | | | | | | |
|---|---|---|---|---|---|---|---|---|
| | 1 | 2 | 3 | 4 | 5 | 6 | 7 | 8 |
| Compounding amount (parts by mass) | | | | | | | | |
| Epoxidized diene-based rubber 1 | 100 | 100 | 100 | - | 100 | 100 | 100 | 100 |
| Epoxidized diene-based rubber 2 | - | - | - | 100 | - | - | - | - |
| Isoprene-based rubber | - | - | - | - | - | - | - | - |
| Imidazole compound 1 | - | - | - | - | - | - | - | - |
| Imidazole compound 2 | 0.87 | 0.87 | 0.87 | 0.87 | - | 0.87 | - | - |
| Imidazole compound 3 | - | - | - | - | - | - | 1.65 | 1.65 |
| Carboxylic acid compound 1 | 0.96 | 0.96 | 0.96 | 0.96 | 0.96 | - | - | - |
| Carboxylic acid compound 2 | - | - | - | - | - | - | 1.1 | 1.1 |
| Carbon black | - | - | - | - | - | - | 54 | - |
| Silica | - | - | - | - | - | - | - | 45 |
| Silane coupling agent | - | - | - | - | - | - | - | 45 |
| Antioxidant | - | - | - | - | - | - | 3 | 3 |
| Oil | - | - | - | - | - | - | - | - |
| Temperature in heating and pressurizing (°C) | 190 | 170 | 150 | 190 | 190 | 190 | 170 | 170 |
| Time spent in heating and pressurizing (minutes) | 45 | 60 | 120 | 45 | 45 | 45 | 60 | 60 |
| Thickness W of cap tread (mm) | 4.0 | 4.0 | 4.0 | 4.0 | 4.0 | 4.0 | 4.0 | 4.0 |
| $A_0/T_1$ | 0 | 0 | 0 | 0 | 0 | 0 | 0 | 0 |
| $A_0 \times W/T_1$ | 0 | 0 | 0 | 0 | 0 | 0 | 0 | 0 |
| Grip performance index | 100 | 80 | 85 | 85 | 95 | 100 | 100 | 95 |

1. Tire
2. Tread
2a. Cap tread
2b. Base tread
3. Sidewall
4. Wing
5. Clinch
6. Band
7. Breaker
8. Carcass
9. Inner liner
R. Rim
$W_{T1}$. Thickness of cap tread
$W_{T2}$. Thickness of base tread

Ws. Thickness of sidewall
Wc. Thickness of clinch
CL. Tire center line

**Claims**

**1.** A rubber composition comprising

a rubber component comprising an epoxidized diene-based rubber,
at least one selected from the group consisting of an imidazole compound and a bivalent or higher-valent carboxylic acid compound, and
oil,
wherein a value ($A_0/T_1$) obtained by dividing a content $A_0$, in parts by mass, of the oil based on 100 parts by mass of the rubber component by a longest relaxation time $T_1$, in hours, of the rubber composition calculated from Procedure X is 0.045 or more.

**2.** The rubber composition of claim 1, wherein $A_0/T_1$ is 0.100 or more.

**3.** The rubber composition of claim 1 or 2, wherein the rubber component comprises greater than 0% by mass and less than 50% by mass of an isoprene-based rubber.

**4.** The rubber composition of any one of claims 1 to 3, wherein an epoxidation rate in the epoxidized diene-based rubber is 50 mol% or less.

**5.** The rubber composition of any one of claims 1 to 4, wherein a content of a filler based on 100 parts by mass of the rubber component is less than 45 parts by mass.

**6.** The tire comprising a tire member composed of the rubber composition of any one of claims 1 to 5.

**7.** The tire of claim 6, wherein a product ($A_0 \times W/T_1$) of $A_0/T_1$ and W is 0.180 or more,
where W represents a thickness, in mm, of the tire member.

**8.** The tire of claim 6 or 7, wherein the tire member is a cap tread.

FIG. 1

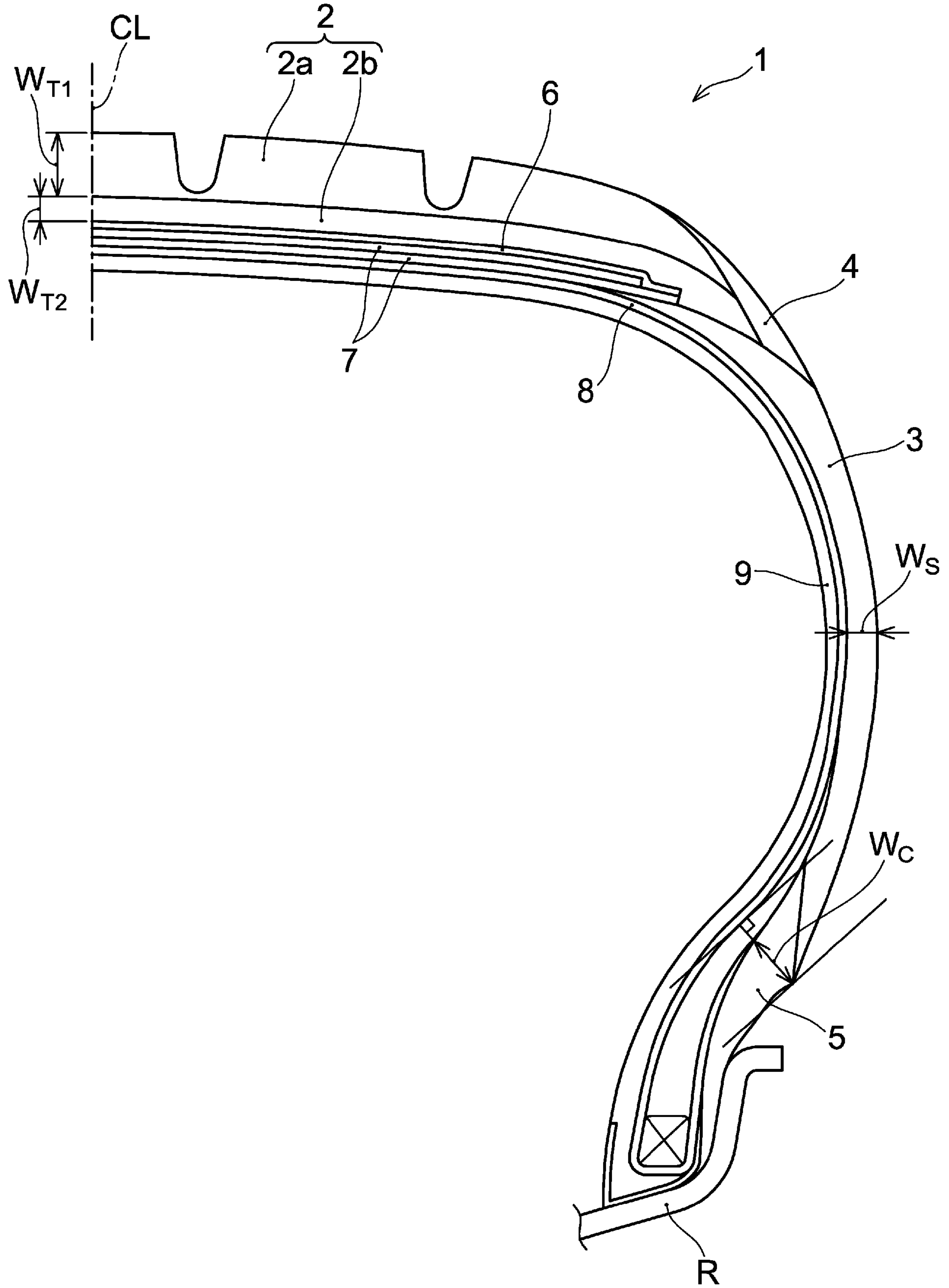

European Patent Office

# EUROPEAN SEARCH REPORT

Application Number
EP 24 21 4445

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 019 126 A1 (SUMITOMO RUBBER IND [JP]) 28 January 2009 (2009-01-28) * paragraphs [0001] - [0006]; claims; examples 3-11; table 1 * | 1-8 | INV. B60C1/00 C08K5/092 C08K5/3445 |
| Y | US 2011/136961 A1 (HATTORI TAKAYUKI [JP] ET AL) 9 June 2011 (2011-06-09) * paragraphs [0001], [0011]; claims; examples 1-5 * | 1-8 | |
| Y | US 2016/122504 A1 (SCHNELL BENOIT [FR] ET AL) 5 May 2016 (2016-05-05) * paragraphs [0125] - [0.27]; claims; example C6 * | 1-8 | |
| | | | TECHNICAL FIELDS SEARCHED (IPC) |
| | | | C08L C08K B60C |

The present search report has been drawn up for all claims

| Place of search | Date of completion of the search | Examiner |
|---|---|---|
| Munich | 13 May 2025 | Reisbeck, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

2

EPO FORM 1503 03.82 (P04C01)

# ANNEX TO THE EUROPEAN SEARCH REPORT ON EUROPEAN PATENT APPLICATION NO. EP 24 21 4445

This annex lists the patent family members relating to the patent documents cited in the above-mentioned European search report. The members are as contained in the European Patent Office EDP file on
The European Patent Office is in no way liable for these particulars which are merely given for the purpose of information.

13-05-2025

| Patent document cited in search report | Publication date | Patent family member(s) | Publication date |
|---|---|---|---|
| EP 2019126 A1 | 28-01-2009 | CN 101443403 A | 27-05-2009 |
| | | EP 2019126 A1 | 28-01-2009 |
| | | JP 4704390 B2 | 15-06-2011 |
| | | JP 2008156593 A | 10-07-2008 |
| | | US 2009053568 A1 | 26-02-2009 |
| | | US 2009054550 A1 | 26-02-2009 |
| | | WO 2007132811 A1 | 22-11-2007 |
| US 2011136961 A1 | 09-06-2011 | CN 102093605 A | 15-06-2011 |
| | | EP 2333009 A1 | 15-06-2011 |
| | | JP 5149316 B2 | 20-02-2013 |
| | | JP 2011140612 A | 21-07-2011 |
| | | KR 20110065360 A | 15-06-2011 |
| | | MY 149977 A | 15-11-2013 |
| | | US 2011136961 A1 | 09-06-2011 |
| US 2016122504 A1 | 05-05-2016 | CN 105246709 A | 13-01-2016 |
| | | EP 3003738 A1 | 13-04-2016 |
| | | FR 3006319 A1 | 05-12-2014 |
| | | JP 6453317 B2 | 16-01-2019 |
| | | JP 6453317 B6 | 20-02-2019 |
| | | JP 2016520154 A | 11-07-2016 |
| | | US 2016122504 A1 | 05-05-2016 |
| | | WO 2014191317 A1 | 04-12-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008285524 A
- JP H0426617 A
- JP H02110182 A
- GB 2113692 B


### Non-patent literature cited in the description


- **MASAOKI TAKAHASHI**. The Third Lecture of Practical Rheology for Beginners, Dynamic Viscoelasticity of Polymers. Nihon Reoroji Gakkaishi, 2021, vol. 49, 135-146